(19) Europäisches Patentamt

European Patent Office

Office européen des brevets

(11) **EP 1 059 542 B1**

(12) **EUROPÄISCHE PATENTSCHRIFT**

(45) Veröffentlichungstag und Bekanntmachung des Hinweises auf die Patenterteilung:
**25.10.2006 Patentblatt 2006/43**

(51) Int Cl.:
***G01V 3/10*** *(2006.01)*

(21) Anmeldenummer: **00110942.0**

(22) Anmeldetag: **25.05.2000**

(54) **Verfahren und Vorrichtung zum Feststellen von Metallkörpern, die sich auf einer laufenden Bahn befinden**

Method and means for detecting metal bodies on a moving web

Procédé et dispositif de détection des corps métalliques sur une bande en mouvement

(84) Benannte Vertragsstaaten:
**AT BE CH CY DE DK ES FI FR GB GR IE IT LI LU MC NL PT SE**

(30) Priorität: **29.05.1999 DE 19924799**
**13.07.1999 DE 19932689**

(43) Veröffentlichungstag der Anmeldung:
**13.12.2000 Patentblatt 2000/50**

(73) Patentinhaber: **ERHARDT + LEIMER GmbH**
**D-86157 Augsburg (DE)**

(72) Erfinder:
• **Krauth, Wolfgang**
**86316 Wulfertshausen (DE)**
• **Huber, Ernst**
**86482 Aystetten (DE)**

(74) Vertreter: **Witzany, Manfred et al**
**Patentanwalt**
**Falkenstrasse 4**
**85049 Ingolstadt (DE)**

(56) Entgegenhaltungen:
**GB-A- 2 025 630        GB-A- 2 192 064**
**JP-A- 59 183 361        US-A- 5 691 640**

**Beschreibung**

Die Erfindung betrifft ein Verfahren zum Feststellen von Metallkörpern gemäß dem Oberbegriff des Patentanspruchs 1, sowie eine Vorrichtung zur Durchführung dieses Verfahrens gemäß dem Oberbegriff des Patentanspruchs 8.

Aus der Praxis sind Verfahren zum Feststellen von Metallkörpern bekannt, bei denen ein elektromagnetisches Wechselfeld ausgesendet wird. Gelangt ein Metallkörper in dieses elektromagnetische Wechselfeld, so wird dessen Amplitude bzw. Phase verändert. Im Bereich des elektromagnetischen Wechselfeldes ist ein Empfänger vorgesehen, aus dessen Signal diese Änderung bestimmbar ist. Zur Auswertung dieses Signals wird dessen Amplitude bzw. Phase mit Schwellwerten verglichen. Über- oder unterschreitet die Amplitude bzw. Phase des empfangenen Signals einen vorgegebenen Toleranzbereich, so wird ein Signal abgegeben, das das Auftreten eines Metallkörpers anzeigt. Da mit diesem Verfahren auch sehr kleine Metallmengen, wie beispielsweise abgebrochene Nadeln feststellbar sein sollen, müssen die Schwellen entsprechend empfindlich eingestellt werden. Dies führt jedoch zu einer hohen Empfindlichkeit auf Metallteile in mittleren Entfernungen, aus denen Warenbahnbearbeitungsmaschinen hergestellt sind. Damit muß bei jeder Änderung der Anordnung der Metallmeldevorrichtung oder sonstiger Teile in deren Umgebung ein Abgleich der Schwellen vorgenommen werden, was zu einem beträchtlichen Arbeitsaufwand führt.

Aus der JP-A-59183361 A ist ein Defektsuchgerät bekannt, welches im wesentlichen Metalle aufspürt. Dieses Defektsuchgerät weist eine Spulenanordnung auf, welche Wirbelströme, die von Metallen in der Umgebung des Defektsuchgeräts herrühren, nachweist. Die Spulenanordnung ist mit einem Differenzverstärker verbunden, der die gemessenen Signale auf eine für die Weiterverarbeitung praktikable Amplitude verstärkt. Der Differenzverstärker steht mit einem Autobalance-Schaltkreis in Wirkverbindung, der dem Differenzverstärker ein Annulierungssignal zuführt. Ein Integrator schaltet dabei die Ausgangsspannung des Differenzverstärkers auf 0, wenn die Störung ein bestimmtes, vorgegebenes Maß übersteigt. Der Autobalance-Schaltkreis verarbeitet dabei ein reines Gleichspannungssignal.

Der Erfindung liegt die Aufgabe zugrunde, ein Verfahren der eingangs genannten Art zu schaffen, bei dem kleine Metallkörper an einer laufenden Warenbahn sicher erkannt werden, feststehende Metallteile jedoch keinen Einfluß haben. Dabei soll bei einer Veränderung der Meßanordnung keine Anpassung erforderlich sein. Außerdem soll eine Vorrichtung zur Durchführung dieses Verfahrens angegeben werden.

Diese Aufgabe wird mit den Verfahrensschritten des Patentanspruchs 1, sowie mit den Merkmalen des Patentanspruchs 8 gelöst.

Bei dem Verfahren gemäß Anspruch 1 wird ein elektromagnetisches Wechselfeld ausgesendet, wobei als Sendeeinrichtung vorzugsweise eine stationär angeordnete, einfache Leiterschleife eingesetzt wird. Ein an der laufenden Warenbahn vorbeibewegter Metallkörper kann dieses elektromagnetische Wechselfeld beeinflussen, wobei je nach Metallart die Phase bzw. die Amplitude dieses Wechselfeldes verändert wird. Bei gutleitenden Metallkörpern, wie beispielsweise Kupfer wird überwiegend die Phase und bei para-, ferro- oder diamagnetischen Metallen die Amplitude des elektromagnetischen Wechselfeldes verändert. Das ggf. veränderte elektromagnetische Wechselfeld wird durch eine Empfangseinrichtung detektiert, wobei das empfangene Signal bzgl. seiner Amplitude und Phasenlage relativ zum ausgesendeten Wechselfeld ausgewertet wird. Hierzu wird ein Kompensationssignal erzeugt, das dem empfangenen Signal in seiner Amplitude und Phase nachgeregelt wird. Das empfangene Signal wird mit dem Kompensationssignal verglichen, wobei das Vergleichsergebnis ausgewertet wird. Weichen das empfangene Signal und das Kompensationssignal in ihrer Amplitude bzw. Phase über eine bestimmte, vorgegebene Toleranz voneinander ab, so wird die Anwesenheit eines Metallkörpers an der Warenbahn angezeigt. Befinden sich dagegen im Bereich des elektromagnetischen Wechselfeldes stationäre Metallteile, so paßt die Regelung das Kompensationssignal an die daraus resultierende Phasen- bzw. Amplitudenänderung des empfangene Signals an, so daß das Vergleichsergebnis zwischen dem empfangenen Signal und dem Kompensationssignal in diesem Fall innerhalb der vorgegebenen Toleranz liegt. Die Toleranzschwellen müssen demnach auch bei einer Änderung der Anordnung der Vorrichtung oder von Metallteilen in deren Umgebung nicht mehr angepaßt werden, was den Justieraufwand entsprechend reduziert. Insbesondere genügt es, die Toleranzschwellen für das Vergleichsergebnis zwischen dem empfangenen Signal und dem Kompensationssignal ohne Berücksichtigung der Verhältnisse am Einsatzort einmal einzustellen. Durch die Unempfindlichkeit des Verfahrens gegenüber unbewegten Metallen können auch elektrische Leitungen im Bereich des elektromagnetischen Wechselfeldes verlegt werden, sofern sie geschirmt und relativ zum Sender und Empfänger unbeweglich festgelegt sind. Damit kann der Aufbau der Vorrichtung entsprechend freizügiger und damit kostengünstiger realisiert werden.

Gemäß Anspruch 2 ist es günstig, das Kompensationssignal aus zwei zueinander phasenverschobenen Teilkompensationssignalen zu bilden. Diese Teilkompensationssignale haben eine jeweils konstante Phasenlage zum ausgesendeten Wechselfeld, wobei deren Amplitude laufend angepaßt wird. Dies ist schaltungstechnisch einfacher als ein Verschieben der Phasenlage des Kompensationssignals zu realisieren. Durch Überlagerung der beiden Teilkompensationssignale, vorzugsweise in Form einer Addition, entsteht ein Signal, dessen Amplitude der geometrischen Addition der Amplituden der beiden Teilkompensationssignale entspricht, wobei dessen Phasenlage vom Amplitudenverhältnis der Teilkompensationssignale abhängt. Damit kann der gewünschte Amplituden- und Phasenabgleich des Kompensationssignals durch einfache Amplituden-Regelungen der Teilkompensationssignale erzielt werden. Dies kann beispielsweise durch Regelung des phasenempfindlich verstärkten Vergleichssignals zwischen dem empfangenen Signal und dem Kompensationssignal erzielt werden. Vorzugsweise sind die beiden Teilkompensationssignale zueinander um 90° phasenverschoben, so daß durch entsprechende Amplitudenwahl der Teilkompensationssignale jede beliebige Phasenlage des Kompensationssignals einstellbar ist. Außerdem vereinfacht sich in diesem Fall der Regelungsaufwand, da die Regelungen der beiden Teilkompensationssignale zueinander entkoppelt sind.

Eine besonders einfache Methode zur Erzeugung des Kompensationssignals oder der Teilkompensationssignale ergibt sich aus Anspruch 3. Durch eine phasenselektive Verstärkung in Form eines Lock-In-Verfahren ist eine Anpassung der Phase des Kompensationssignals durch die Regelung sehr einfach realisierbar. Insbesondere bei der Verwendung von zueinander phasenverschobenen Teilkompensationssignalen kann die erforderliche phasenverschobene Auswertung des Regelsignals sehr einfach durch entsprechend phasenverschobene Ansteuerung der Referenzeingänge beider Lock-In-Verstärker erfolgen. Damit können die Regelschaltungen für beide Teilkompensationssignale völlig übereinstimmend aufgebaut werden, wobei lediglich die Referenzeingänge der Lock-In-Verstärker unterschiedlich angesteuert werden. Besonders vorteilhaft ist es, wenn das Vergleichsergebnis zwischen dem empfangenen Signal und dem Kompensationssignal Lock-In-verstärkt wird. Dabei können die Referenzeingänge der Lock-In-Verstärker eine jeweils konstante Phasenlage zum gesendeten Wechselfeld aufweisen.

Die Regelung des Kompensationssignals bzw. der Teilkompensationssignale muß ausreichend träge sein, damit ein Signal, daß von einem an der Warenbahn befindlichen Metallkörper herrührt nicht durch die Regelung ausgeglichen und damit im Vergleichsergebnis unterdrückt wird. Andererseits sollte das Kompensationssignal langfristig möglichst exakt dem empfangenen Signal entsprechen, damit die eingestellten Schwellwerte unabhängig vom konkreten Einsatzort gültig bleiben. Diese Forderungen werden am einfachsten gemäß Anspruch 4 dadurch erreicht, daß die Regelung ausschließlich integrierend wirkt, wobei die Integrationszeitkonstante im Bereich zwischen 3 sec. und 30 sec., vorzugsweise um 10 sec., dimensioniert wird. Diese verhältnismäßig lange Integrationszeit stellt sicher, daß wichtige, kurzzeitige Meßsignale nicht unterdrückt werden. Eine Verlängerung der Integrationszeit über 30 sec. hinaus führt dagegen zu einer unverhältnismäßig langen Regelzeit nach Inbetriebnahme der Vorrichtung. Die integrierende Regelung führt langfristig zu einem gewünschten exakten Regelausgleich. Eine Hinzunahme eines Proportional- oder Differenzialanteils des Reglers würde demgegenüber zu einer Verkürzung der Regelzeit führen, was wegen der damit verbundenen Unterdrückung von Signalen, die von einem an der Warenbahn befindlichen Metallkörper herrühren, unerwünscht ist.

Das Vergleichssignal zwischen dem empfangenen Signal und dem Kompensationssignal kann sowohl im Hinblick auf seine Amplitude als auch seine Phasenlage ausgewertet werden. In letzterem Fall ist es vorteilhaft, wenn das Vergleichssignal unter allen Betriebsbedingungen oszillierend ist. Dies wird gemäß Anspruch 5 besonders einfach dadurch realisiert, daß das Kompensationssignal durch Regelung des Vergleichsergebnisses zwischen dem empfangenen Signal und dem Kompensationssignal einen oszillierenden Soll-Wert erhält, der aus dem ausgesendeten Wechselfeld abgeleitet ist. Das Vergleichssignal oszilliert demnach im Takt des ausgesendeten Wechselfeldes, so daß dessen Phasenlage einfach ausgewertet werden kann.

Durch die vorbeschriebene Regelung wird erreicht, daß das Vergleichssignal eine minimale Amplitude aufweist. In diesem Betriebszustand wirken sich kleine Metallkörper, die in den Bereich der Empfangseinrichtung gelangen, lediglich auf die Phasenlage des Vergleichssignals aus. Dabei ist die von einem ferromagnetischen Metallkörper verursachte Phasenverschiebung zu der eines gut leitenden Metallkörpers entgegengesetzt. Zur exakten Auswertung dieser Phasenverschiebung wird das Vergleichsergebnis gemäß Anspruch 6 einem Phasendetektor zugeführt. In diesem Phasendetektor wird die Phase des Vergleichssignale verschoben, wobei die Phasenverschiebung durch Regelung der Phasendifferenz zwischen dem phasenverschobenen Vergleichssignal und dem Oszillatorsignal gesteuert wird. Alternativ könnte auch das Ozillatorsignal durch die Regelung phasenverschoben werden. Um eine detaillierte Auswertung des Vergleichsergebnisses zwischen dem empfangenen Signal und dem Kompensationssignal zu ermöglichen, wird vorgeschlagen, den Vergleich in Form einer Addition oder Subtraktion beider Signale durchzuführen. Dies hat den Vorteil, daß das Vergleichsergebnis direkt als Regelsignal zur Erzeugung des Kompensationssignals bzw. der Teilkompensationssignale verwendet werden kann.

Zur Vermeidung von Störungen in der Signalerkennung ist es gemäß Anspruch 7 günstig, auf das Vergleichsergebnis eine Korrelationsfunktion anzuwenden. Insbesondere bei bekannter Bahnlaufgeschwindigkeit und wirksamer Breite der Empfängereinrichtung müssen Signale, die von einem an der Warenbahn befindlichen Körper herrühren, ein bestimmtes zeitliches Verhalten aufweisen. Durch Anwendung der Korrelationsfunktion können jene Signale sehr einfach ausgefiltert werden, die aufgrund ihres zeitlichen Verhaltens nicht von an der Warenbahn befindlichen Metallkörpern herrühren können. Werden zwei oder mehr Empfängereinrichtungen in Bahnlaufrichtung hintereinander angeordnet, so müssen die Signale von an der Warenbahn befindlichen Metallkörpern aufgrund der Bahngeschwindigkeit in einer bestimmten, vorgegebenen zeitlichen Abfolge an beiden Empfängern feststellbar sein, die ebenfalls mit einer Korrelationsfunktion feststellbar ist. Wird das Empfangssignal zwischen beiden Empfangseinrichtungen abgegriffen, so verursacht ein an einer Warenbahn befindlicher Metallkörper bei Durchlaufen der ersten Empfangseinrichtung ein positives und bei der zweiten Empfangseinrichtung ein negatives Signal. Dieser Polaritätswechsel kann ebenfalls mit der Korrelationsfunktion festgestellt werden, so daß Störungen, die nicht von an der Warenbahn befindlichen Metallkörpern herrühren, zuverlässig ausgeschlossen werden können.

Die Vorrichtung gemäß Anspruch 8 hat sich zur Durchführung des Verfahrens besonders bewährt. Diese Vorrichtung weist mindestens eine Sende- und Empfangseinrichtung auf, mit deren Hilfe ein elektromagnetisches Wechselfeld ausgestrahlt und empfangen wird. Vorzugsweise sind Sende- und Empfangseinrichtung induktiv miteinander gekoppelt, um ein möglichst starkes und damit rauscharmes Signal zu empfangen. Die Empfangseinrichtung steht mit einem Vergleicher in Wirkverbindung, der das empfangene Signal mit einem Kompensationssignal vergleicht. Das Kompensationssignal wird von mindestens einer Regeleinrichtung erzeugt, die von der Amplitude und der Phasenlage des empfangenen Signals beeinflußt ist. Im eingeschwungenen Zustand der Regeleinrichtung stimmt demnach das erzeugte Kompensationssignal mit dem empfangenen Signal überein. Die Regeleinrichtung kann dabei direkt das Kompensationssignal als Ist-Wert regeln, wobei in diesem Fall das empfangene Signal als Soll-Wert dient. Alternativ könnte die Regeleinrichtung auch das Ausgangssignal des Vergleichers regeln, wobei in diesem Fall als Soll-Wert ein Null-Pegel oder ein vom gesendeten Wechselfeld abgeleitetes Signal eingesetzt wird. Mit dieser Vorrichtung wird erreicht, daß Metallkörper, die sich an der laufenden Warenbahn befinden und sich folglich an der Sende- und Empfangseinrichtung vorbeibewegen, zuverlässig anhand des Ausgangssignals des Vergleichers erkennen lassen. Andererseits verursachen selbst große, stationär angeordnet Metallkörper kein Ausgangssignal, da die Regeleinrichtung ein dem empfangenen Signal gleiches Kompensationssignal erzeugt.

Die Ausbildung der Sende- und Empfangseinrichtung gemäß Anspruch 9 stellt eine hohe Empfindlichkeit des empfangenen Signals sicher, so daß selbst kleine Metallkörper bis ca. 1 mg sicher detektiert werden können. Die Ausbildung der Sendeeinrichtung als Leiterschleife ist besonders einfach, wobei innerhalb der Leiterschleife ein örtlich annähernd konstantes Magnetfeld entsteht. Da die Leiterschleife die Warenbahn quer zu ihrer Laufrichtung übergreift ist sichergestellt, daß die Ansprechempfindlichkeit der Vorrichtung unabhängig von der Lage des Metallkörpers auf der Warenbahn ist. Grundsätzlich könnten zur Erhöhung des Magnetfeldes mehrere Leiterschleifen spulenartig angeordnet sein, in der Regel reicht jedoch eine einzelne Leiterschleife völlig aus. An den Enden der Leiterschleife ist ein Kondensator angeschlossen, so daß die Induktivität der Leiterschleife zusammen mit dem Kondensator einen Schwingkreis bildet. Wird dieser Schwingkreis vom Sendeverstärker nahe seiner Resonanzfrequenz angesteuert, so muß zur Aufrechterhaltung des elektromagnetischen Wechselfeldes nur eine verhältnismäßig geringe Energie zugeführt werden. Um ein größtmögliches Empfangssignal zu erzeugen, ist die Empfangseinrichtung vorzugsweise in der Ebene der Sende-Leiterschleife und innerhalb dieser vorgesehen. Zum Schutz vor direktem elektrischem Übersprechen zwischen der Sendeeinrichtung und der Empfangseinrichtung können zwischen beiden Schirmleitungen vorgesehen sein, die vorzugsweise auf konstantem Potential gelegt sind. Die Ausbildung der Empfangseinrichtung in Form von zwei in Bahnlaufrichtung hintereinander angeordneten Leiterschleifen reduziert den Einfluß von Störsignalen. Ein auf der Warenbahn befindlicher Metallkörper muß entsprechend der Bahnlaufgeschwindigkeit in beiden Leiterschleifen der Empfangseinrichtung jeweils ein Signal erzeugen, die zueinander zeitlich korreliert sind. Durch Auswertung dieser Korrelation kann demnach sehr genau unterschieden werden, ob das von der Vorrichtung erzeugte Signal von einem an der Warenbahn befindlichen Metallkörper oder aus einer externen Störquelle resultiert.

Grundsätzlich könnte auch die Sendeeinrichtung aus mindestens zwei entgegengesetzt angesteuerten Leiterschleifen bestehen, während die Empfangseinrichtung von einer Schleife gebildet ist. In diesem Fall ist das von den Sendeschleifen erzeugte Magnetfeld in beiden Schleifen zueinander entgegengesetzt gepolt, so daß das in der Empfangsschleife empfangene Signal in der gleichen Weise korreliert ist.

Die Weiterbildung der Vorrichtung gemäß Anspruch 10 erlaubt eine Vereinfachung der Auswerteschaltung. Dabei sind die Leiterschleifen der Sende- oder Empfangseinrichtung einseitig miteinander verbunden und vorzugsweise auf Masse gelegt. Die Gegenenden sind durch einen Kondensator abgeschlossen, so daß ein Schwingkreis gebildet ist. Dieser Schwingkreis wird vorzugsweise nahe seiner Resonanz betrieben, so daß selbst geringe Signale durch die Resonanzwirkung entsprechend verstärkt werden. Dieser Kondensator steht mit einem Sendeverstärker oder einem Differenzverstärker in Wirkverbindung, der die Differenz der Signale in beiden Leiterschleifen auswertet. Ein auf der Warenbahn befindlicher Metallkörper verursacht demnach ein Signal wechselnder Polarität, wenn er von der ersten in die zweite Leiterschleife gerät. Die zeitliche Korrelation des Polwechsels ergibt sich direkt aus dem mittleren Abstand der beiden Leiterschleifen und der Warenbahngeschwindigkeit. Durch Auswertung dieser Korrelation können Störsignale besonders zuverlässig eliminiert werden, so daß auch kleinste Metallkörper noch sicher erkannt werden können. Um eine detaillierte, phasen- und amplitudenbezogene Auswertung des vom Vergleicher erzeugten Signals durchführen zu können, wird dieser vorteilhaft von einem Summierer bzw. Differenzverstärker gebildet. Um einen ausreichend genauen Abgleich des Kompensationssignals mit dem empfangenen Signal zu erzielen, ist es vorteilhaft, die Regeleinrichtung als Integrator auszubilden. Die Integrationszeitkonstante ist dabei ausreichend hoch zu wählen, damit die Regeleinrichtung ein Signal, daß von einem auf der Warenbahn befindlichen Metallkörper herrührt, nicht durch das Kompensationssignal unterdrückt. Die Regeleinrichtung arbeitet demnach als reiner I-Regler, da P- und D-Anteile, die Regelgeschwindigkeit lediglich erhöhen würden.

Die Regeleinrichtung liefert an ihrem Ausgang lediglich ein DC-Signal, dessen Höhe die Amplitude des geforderten Kompensationssignals oder Teilkompensationssignals bestimmt. Um hieraus das Kompensationssignal bzw. Teilkompensationssignal zu erzeugen, wird gemäß Anspruch 11 vorgeschlagen, die Regeleinrichtung ausgangsseitig mit einem Multiplizierer zu verbinden, an dessen weiteren Eingang ein Oszillator angeschlossen ist, der auch die Sendeeinrichtung ansteuert. Dieser Multiplizierer moduliert demnach das Oszillatorsignal in seiner Amplitude in Abhängigkeit vom Ausgangssignal der Regeleinrichtung. Auf diese Weise wird ein Teilkompensationssignal mit geregelter Amplitude erzeugt. Durch Vorsehen zweier Regeleinrichtungen können auf einfachem Wege zwei Teilkompensationssignale erzeugt werden, die vorzugsweise zueinander um 90° phasenverschoben sind. Diese beiden Teilkompensationssignale können durch einen einfachen Summierer zu ei - nem Kompensationssignal überlagert werden, dessen Phase und Amplitude von den Amplituden der Teilkompensationssignale abhängig ist. Dieses Kompensationssignal kann direkt dem Vergleicher zugeführt werden.

Um eine phasenselektive Auswertung des Ist-Wert-Signals der Regeleinrichtung einfach zu realisieren, ist es gemäß Anspruch 12 günstig, der Regeleinrichtung mindestens einen Lock-In-Verstärker vorzuschalten. Dieser steht eingangsseitig mit dem Vergleicher oder der Empfangseinrichtung in Wirkverbindung, wobei sein Referenzeingang phasenkonstant zur Sendeeinrichtung angesteuert wird. Der Lock-In-Verstärker verstärkt sein Eingangssignal phasenselektiv, wobei ein zum Referenzsignal in Phase liegendes Signal maximal und ein hierzu um 90° phasenverschobenes Signal nicht verstärkt wird. Auf diese Weise wird die am Eingang des Lock-In-Verstärkers ankommende Phaseninformation in eine Ausgangsspannung umgewandelt. Um sowohl die Phasen- als auch die Amplitudeninformation des Eingangssignals auswerten zu können, wird vorgeschlagen, am Referenzeingang wenigstens eines der Lock-In-Verstärker ein phasenverschobenes Signal anzulegen. Vorzugsweise sind die Referenzeingänge der Lock-In-Verstärker zueinander um 90° phasenverschoben, so daß die Amplituden- und Phaseninformation besonders einfach aus den Ausgangssignalen der beiden Lock-In-Verstärker gewonnen werden kann.

Zur Erhöhung der Ansprechempfindlichkeit der Vorrichtung ist es gemäß Anspruch 13 vorteilhaft, das vom Vergleicher erzeugte Signal einem Phasendetektor zuzuführen. Dieser Phasendetektor ermittelt die Phasenlage des oszillierenden Vergleichssignals relativ zum ausgesendeten Wechselfeld. Kleine Metallteilchen verursachen im wesentlichen nur eine Phasenverschiebung des Vergleichssignals, ohne daß diese auf dessen Amplitude eine Auswirkung hätten. Erst größere Metallteilchen bewirken auch eine Veränderung der Amplitude des Vergleichssignals. Der Phasendetektor weist einen steuerbaren Phasenschieber auf, der das Vergleichssignal um eine von einer Signalspannung abhängige Phasendifferenz verschiebt. Damit kann die Phasenlage des Vergleichssignals an jene des ausgesendeten Wechselfeldes angepaßt werden, was die Detektion von geringen Phasenverschiebungen zwischen beiden erleichtert. Ein D-Flip-Flop erzeugt an seinem Ausgang eine rechteckförmige Wechselspannung, deren Puls-Pausen-Verhältnis von der Phasenlage zwischen seinem Dateneingang und seinem Takteingang abhängt. Das D-Flip-Flop arbeitet in diesem Fall als Pulsbreitenmodulator, dessen Ausgangssignal den Ist-Wert einer Regeleinrichtung bildet. Diese Regeleinrichtung steuert direkt den Phasenschieber an. Damit entsteht am Ausgang des D-Flip-Flops nur dann ein Signal, wenn sich die Phasenlage des Vergleichssignals rasch ändert. Das D-Flip-Flop ergibt damit einen besonders einfachen und trotzdem wirkungsvollen Phasendetektor.

Das erfindungsgemäße Verfahren und der Erfindungsgegenstand werden beispielhaft anhand der Zeichnung erläutert, ohne den Schutzumfang zu begrenzen.

Es zeigt:

Figur 1 eine Sende- und Empfangseinrichtung,
Figur 2 einen schematischen Schaltplan,
Figur 3 eien Amplitudendetektor,
Figur 4 einen Phasendetektor,
Figur 5 einen Lock-In-Verstärker und
Figur 6 einen alternativen Lock-In-Verstärker.

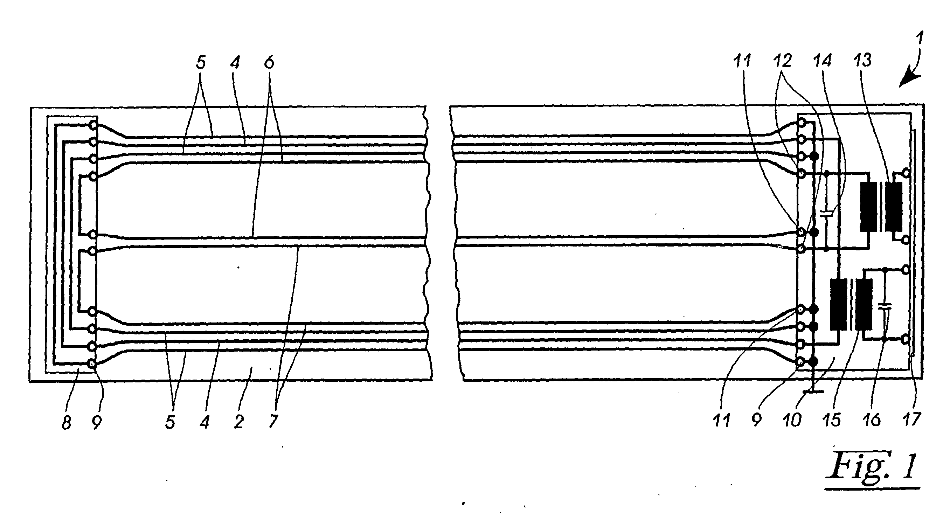

Figur 1 zeigt eine Vorrichtung 1 zum Feststellen von Metallkörpern. Die Vorrichtung 1 besteht aus einem Träger 2 aus glasfaserverstärktem Kunststoff, so daß dieser eine ausreichende Tragfähigkeit aufweist und trotzdem elektromagnetische Felder in keiner Weise beeinflußt. Der Träger 2 ist als selbsttragendes Formrohr mit etwa quadratischem Querschnitt ausgebildet.

An einer Außenfläche des Trägers 2, die einer Warenbahn zugewandt ist, sind Kupferdrähte 4, 5, 6, 7 in Nuten eingelassen und mit Kunstharz ausgegossen. Dies verhindert dabei eine Bewegung der Drähte 4, 5, 6, 7, die das Meßsignal der Vorrichtung 1 beeinflussen könnte. Eine Sendeschleife 4 erstreckt sich U-förmig über nahezu die gesamte Länge des Trägers 2 und ist beidseits von jeweils einer U-förmigen Schirmleitung 5 umgeben. Innerhalb der Fläche der Sendeschleife 4 sind zwei Empfangsschleifen 6, 7 vorgesehen, die sich ebenfalls U-förmig über nahezu die gesamte Länge des Trägers 2 erstrecken. Die Schirmleitungen 5 verhindern ein elektrisches Übersprechen von der Sendeschleife 4 in die Empfangsschleifen 6, 7. Durch die Anordnung der Empfangsschleifen 6, 7 innerhalb der Sendeschleife 5 und in der gleichen Ebene wie diese wird eine optimale induktive Kopplung zwischen beiden erzielt.

Um eine optimale Fixierung der Drähte 4, 5, 6, 7 zu erzielen, sind die sie aufnehmenden Nuten mit nahezu gleicher Breite und Tiefe wie der Drahtdurchmesser ausgebildet. Deshalb sind die Umlenkungen der Drähte 4, 5, 6, 7 in Form einer kupferkaschierten Platine 8 ausgebildet. An dieser sind die Drähte 4, 5, 6, 7 über Lötstellen 9 festgelegt.

Am in Figur 1 rechts dargestellten offenen Ende der Sende- 4 und Empfangsschleife 6, 7 ist ebenfalls eine Platine 10 über Lötstellen 9 befestigt. Durch diese Platine 10 sind die Schirmleitungen 5 sowie die in Figur 1 jeweils unteren Leiterenden 11 der Empfangsschleifen 6, 7 mit Masse verbunden. Die Gegenenden 12 der Empfangsschleifen 6, 7 sind mit einem Transformator 13 und einem dazu parallel liegenden Kondensator 14 verbunden. Der Transformator 13 sorgt für eine Impedanzanpassung zwischen den Empfangsschleifen 6, 7 und einer nachfolgenden, nicht dargestellten Verstärkereinrichtung, wobei er zusätzlich eine Spannungsverstärkung des von den Empfangsschleifen 6, 7 empfangenen Signals vornimmt. Die Induktivität der Empfangsschleifen 6, 7 bildet mit dem Kondensator 14 einen Schwingkreis, der nahe der Resonanz betrieben wird und damit zu einer weiteren Verstärkung der empfangenen Signale führt.

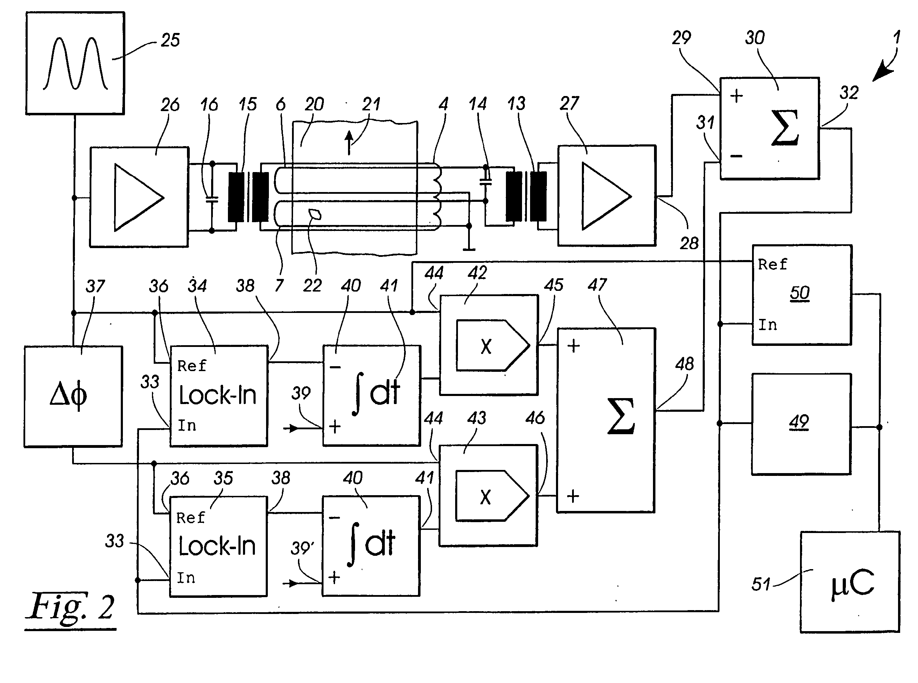

Die Sendeschleife 4 ist über einen weiteren Transformator 15 mit einem weiteren Kondensator 16 verbunden. Der Transformator 15 sorgt für eine Impedanzanpassung zwischen einem nicht dargestellten Sendeverstärker und der Sendeschleife 4, wobei er zusätzlich eine Stromverstärkung vornimmt. Die Induktivität der Sendeschleife 4 bildet mit dem Kondensator 16 einen Schwingkreis, der nahe der Resonanz betrieben wird und damit einen Teil der Sendeenergie liefert. Die beiden Transformatoren 13, 15 sind mit einer schematisch dargestellten Auswerteschaltung 17 verbunden, die genauer anhand von Figur 2 erläutert wird.

In Figur 2 ist die Sende- 4 und Empfangsschleife 6, 7 nur noch schematisch dargestellt. In ihrer unmittelbaren Nähe ist eine Warenbahn 20 angeordnet, die sich in Richtung 21 bewegt. Auf der Warenbahn 20 befinden sich manchmal Metallkörper 22, insbesondere abgebrochene Nadeln und dgl.. Wird die Warenbahn 20 beispielsweise durch eine Preßeinrichtung gezogen, so können deren Walzen durch derartige Metallteile 22 beschädigt werden. Es ist daher in diesem Fall erforderlich, die Walzen kurzzeitig anzuheben oder die Warenbahn 20 auch anzuhalten, um den Metallkörper 22 zu entfernen.

In jedem Fall ist es erforderlich, das Auftreten des Metallkörpers 22 auf der Warenbahn 20 mit ausreichender Sicherheit festzustellen. Hierzu wird die Sendeschleife 4 mit einem Wechselstrom beaufschlagt, so daß diese ein elektromagnetisches Wechselfeld abstrahlt. Dieses Wechselfeld wird von den beiden Empfangsschleifen 6, 7 empfangen, deren Differenzsignal ausgewertet wird. Bei einem exakt symmetrischen Aufbau der Anordnung und Fehlen jeglicher das elektromagnetische Wechselfeld beeinflussender Körper 22 wäre das zwischen den Empfangsschleifen 6, 7 anstehende Spannungssignal Null. In der Regel befinden sich jedoch in der Umgebung der Sendeschleife 4 größere Metallkörper, wie beispielsweise Rahmen, Walzen und dgl., die ein von den konkreten Einsatzbedingungen abhängiges Differenzsignal zwischen den beiden Empfangsschleifen 6, 7 erzeugen.

Tritt nun der Metallkörper 22, der sich auf der Warenbahn 20 befindet, in die untere Empfangsschleife 7 ein, so verursacht er je nach Material eine Veränderung der Signalamplitude oder -phase. Mit der Bewegung der Warenbahn 20 in Richtung 21 gerät der Metallkörper 22 in den Bereich der Empfangsschleife 6, die in Gegenrichtung zur Empfangsschleife 7 an den Transformator 13 angekoppelt ist. Der Metallkörper 22 verursacht zu diesem Zeitpunkt eine Amplituden- bzw. Phasenänderung des empfangenen Signals, das zur vorbeschriebenen Änderung gegengleich ist. Das Ausgangssignal der Transformators 13 weist damit einen Polaritätswechsel auf und wird zur Feststellung des Vorhandenseins des Metallkörpers 22 ausgenutzt.

Im folgenden wird die Auswerteschaltung anhand der Figur 2 beschrieben. Ein Oszillator 25 erzeugt eine Sinusschwingung bei einer Frequenz von ca. 200 kHz. Diese Sinusschwingung wird in einem Sendeverstärker 26 sowohl strom- als auch spannungsverstärkt. Der Sendeverstärker 26 ist ausgangsseitig direkt mit dem sendeseitigen Transformator 15 verbunden, der für eine weitere Stromverstärkung sorgt und an seinem Ausgang die Sendeschleife 4 treibt.

Das Differenzsignal der beiden Empfangsschleifen 6, 7 wird im empfangsseitigen Transformator 13 spannungsverstärkt. Dieser ist mit einem als Differenzverstärker ausgebildeten Empfangsverstärker 27 verbunden und liefert an seinem Ausgang 28 ein zum Empfangssignal proportionales Signal. Dieses Signal wird einem nicht invertierenden Eingang 29 eines Vergleichers 30 zugeführt, der als Summierer ausgebildet ist. An einem invertierenden Eingang 31 des Vergleichers 30 wird ein Kompensationssignal angelegt, dessen Erzeugung im folgenden beschrieben wird.

An einem Ausgang 32 des Vergleichers 30 wird als Vergleichsergebnis ein Signal abgegeben, das der Differenz zwischen dem verstärkten empfangenen Signal am Eingang 29 und dem Kompensationssignal am Eingang 31 entspricht. Stimmen beide Signale überein, so liefert der Vergleicher 30 ein Null-Signal.

Das vom Vergleicher 30 erzeugte Vergleichsergebnis wird Eingängen 33 zweier Lock-In-Verstärker 34, 35 zugeführt. An einem Referenzeingang 36 des Lock-In-Verstärkers 34 ist der Oszillator 25 direkt angeschlossen. Dem gegenüber ist der Referenzeingang 36 des Lock-In-Verstärkers 35 über einen Phasenschieber 37 mit dem Oszillator 25 verbunden, der das Ozillatorsignal um 90° verschiebt. Die beiden Lock-In-Verstärker 34, 35 verstärken demnach das Vergleichsergebnis des Vergleichers 30 phasenselektiv einerseits in Phase und andererseits außer Phase zum Oszillator 25. An Ausgängen 38 der Lock-In-Verstärker werden demnach Gleichspannungspegel abgegeben, die die Amplituden- und Phaseninformation des Vergleichsergebnisses enthalten. Bezeichnet man die Ausgangssignale der Lock-In-Verstärker 34 und 35 mit A und B, so läßt sich die Amplitude des Vergleichsergebnisses in der Form $\sqrt{A^2 + B^2}$ und deren Phasenlage in der Form arctan (A/B) berechnen.

Um eine selbsttätige Anpassung des Kompensationssignals an das verstärkte empfangene Signal zu erzielen, sind die Ausgänge 38 der Lock-In-Verstärker 34, 35 mit Regeleinrichtungen 40 verbunden, die in Form von Integratoren aufgebaut sind. Die Integrationszeitkonstante ist auf ca. 10 sec. dimensioniert, um eine ausreichend langsame Regelung zu erzielen, die keine Nutzsignale unterdrückt. Andererseits sorgen die Integratoren 40 bei langzeitigen Störungen zu einer exakten Angleichung des Kompensationssignals an das verstärkte empfangene Signal. Die Regeleinrichtungen 40 weisen Soll-Wert-Eingänge 39, 39' auf, die mit jeweils einer Referenzspannungsquelle verbunden sind. Damit wird das Eingangssignal der Lock-In-Verstärker 34, 35 auf einen oszillierenden Sollwert geregelt, so daß eine phasenselektive Auswertung des Ausgangssignals des Vergleichers 30 ermöglicht wird. Dies reduziert den Einfluß von Drifts in der Auswerteschaltung. Grundsätzlich könnte auch ein oszillierendes Signal aus dem Oszillator 25 abgeleitet werden, das mittels Lock-In-Verstärker phasenselektiv ausgewertet wird, um die Soll-Wert-Eingänge 39, 39' der Regeleinrichtungen 40 anzusteuern.

Der Ausgang 41 der Regeleinrichtungen 40 ist mit jeweils einem Multiplizierer 42, 43 verbunden, deren weiterer Eingang 44 einerseits mit dem Oszillator 25 und andererseits mit dem Phasenschieber 37 verbunden ist. Die beiden Multiplizierer 42, 43 multiplizieren demnach das von der jeweiligen Regeleinrichtung 40 erzeugte Korrektursignal mit dem Signal am korrespondierenden Referenzeingang 36 des Lock-In-Verstärkers 34, 35. An einem Ausgang 45 des Multiplizierers 42 liegt demnach ein Signal an, das mit dem Oszillator 25 in Phase ist, wobei die korrespondierende Regeleinrichtung 40 aufgrund der Wirkungsweise des Lock-In-Verstärkers 34 nur auf den In-Phase-Anteil des Vergleichsergebnisses des Vergleichers 30 reagiert. Dem gegenüber liegt am Ausgang 46 des Multiplizierers 43 ein Signal an, das zum Oszillator 25 um 90° phasenverschoben ist, wobei der korrespondierende Lock-In-Verstärker 35 nur auf den um 90° phasenverschobenen Anteil des Vergleichsergebnisses reagiert. Die Signale an den Ausgängen 45 und 46 sind demnach zueinander um 90° phasenverschoben, wobei ihre Amplituden korrespondierend zu ihrer Phasenlage phasenselektiv angesteuert sind. Diese Signale kompensieren damit jeweils eine Phasenlage des empfangenen Signals und bilden Teilkompensationssignale.

Die beiden an den Ausgängen 45, 46 anstehenden Teilkompensationssignale werden in einem Summierer 47 additiv überlagert, wobei an einem Ausgang 48 des Summierers 47 ein in seiner Phase und Amplitude geregeltes Kompensationssignal ansteht. Dieses Kompensationssignal wird dem invertierenden Eingang 31 des Vergleichers 30 zugeführt, der es vom verstärkten empfangenen Signal abzieht. Alternativ könnte der Summierer 47 auch mit dem Vergleicher 30 zusammengefaßt werden.

Aufgrund der Regelung des Kompensationssignals am Ausgang 48 des Summierers 47 liefert der Vergleicher 30 an seinem Ausgang 32 bei rein stationären Störungen stets ein phasen- und amplitudenkonstantes Wechselspannungs-Signal. Befindet sich jedoch ein Metallkörper 22 auf der Warenbahn 20, so wird dieser mit der Bahn 20 in Bahnlaufrichtung 21 bewegt, so daß eine schnelle, dynamische Phasen- oder Amplitudenänderung entsteht. Aufgrund der langen Integrationszeitkonstante der Regeleinrichtung 40 ist diese nicht in der Lage, auf diese dynamische Störung zu reagieren, so daß das am Ausgang 48 des Summierers 47 anstehende Kompensationssignal während des Durchgangs des Metallkörpers 22 durch die Empfangsschleifen 6, 7 weder seine Amplitude noch seine Phase ändert. Am Ausgang 32 des Vergleichers 30 entsteht in diesem Fall ein in seiner Phase bzw. Amplitude verändertes Signal, das einerseits einem Amplitudendetektor 49 und andererseits einem Phasendetektor 50 zugeführt wird. Die digitalen Ausgangssignale des Amplitudendetektors 49 und des Phasendetektors 50 werden einem Mikrocontroller 51 zugeführt, der diese Signale auswertet und insbesondere hierauf eine Korrelationsfunkrion anwendet.

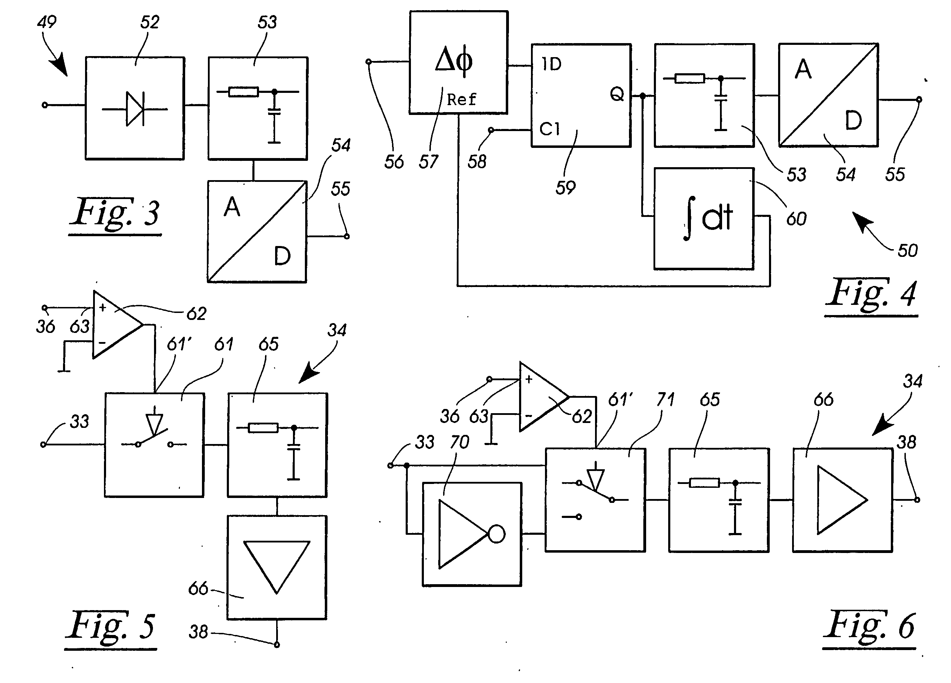

Figur 3 zeigt eine bevorzugte Ausführungsform des Amplitudendetektors 49. Das Eingangssignal des Amplitudendetektors 49 wird von einem kompensierten Gleichrichter 52 in eine unipolare Spannung umgewandelt. Diese Spannung wird in einem Tiefpaß 53 gefiltert und von einem Analog-Digital-Umsetzer 54 in einen Digitalwert gewandelt.

Figur 4 zeigt eine bevorzugte Ausführungsform eines Phasendetektors 50. Ein Eingang 56 des Phasendetektors 50 steht mit einem steuerbaren Phasenschieber 57 in Wirkverbindung, der an seinem Ausgang ein phasenverschobenes Wechselspannungssignal erzeugt. Die Größe der Phasenverschiebung hängt von der Spannung am Referenzeingang Ref ab. Das Ausgangssignal des Phasenschiebers 57 wird einem Dateneingang 1D eines D-Flip-Flops 59 zugeführt, dessen Takteingang C1 vom Referenzeingang 58 des Phasendetektors 50 angesteuert wird. Dieser Referenzeingang 58 wird direkt vom Sendeoszillator 25 angesteuert. Alternativ könnte der Eingang 1D und der Takteingang C1 auch vertauscht werden. Das D-Flip-Flop 59 erzeugt an seinem Ausgang Q ein rechteckförmiges Wechselspannungssignal, dessen Puls/Pausen-Verhältnis von der relativen Phasenlage der Wechselspannungen am Eingang 1D und am Takteingang C1 abhängt.

Das Ausgangssignal des D-Flip-Flops wird einer Regeleinrichtung 60 zugeführt, die ausschließlich integrierend wirkt und eine kürzere Regelzeit als die Regeleinrichtungen 40 aufweist. Die Zeitkonstante der Regeleinrichtung 60 wird auf ca. 5 Sek. eingestellt. Das Ausgangssignal der Regeleinrichtung 60 wird direkt dem Referenzeingang Ref des Phasenschiebers 57 zugeführt. Die pulsbreitenmodulierte Ausgangsspannung des D-Flip-Flops 59 wird außerdem einem Tiefpaßfilter 53 zugeführt, dem ein Analog-Digital-Umsetzer 54 nachgeordnet ist, der mit dem Mikrocontroller in Wirkverbindung steht.

Figur 5 zeigt eine erste Ausführungsform eines Lock-In-Verstärkers 34, die sich durch einen besonders einfachen schaltungstechnischen Aufbau auszeichnet. Der Signaleingang 33 des Lock-In-Verstärkers 34 ist über einen Analogschalter 61 geführt, dessen Steuereingang 61' von einem Komparator 62 angesteuert wird. Ein nicht invertierender Eingang 63 des Komparators 62 bildet den Referenzeingang 36 des Lock-In-Verstärkers 34. Der Komparator 62 liefert an seinem Ausgang 64 immer dann einen H-Pegel, wenn das Eingangssignal am Referenzeingang 36 positiv ist. In diesem Fall ist der Analogschalter 61 geschlossen, so daß dieser das Signal vom Eingang 33 an ein Tiefpaßfilter 65 weitergibt. Bei negativem Referenzsignal ist der Analogschalter 61 dagegen offen und gibt ein Null-Signal an den Tiefpaßfilter 65 ab. Der Tiefpaßfilter 65 erhält demnach nur jenen Anteil des Eingangssignals, der zum Referenzsignal in Phase ist. Das gefilterte Gleichspannungssignal wird abschließend in einem Verstärker 66 verstärkt, der den Ausgang 38 des Lock-In-Verstärkers 34 bildet.

Figur 6 zeigt eine alternative Ausführungsform des Lock-In-Verstärkers 34, wobei lediglich die Unterschiede zur Ausführungsform gemäß Figur 3 erläutert werden. Das Signal am Eingang 33 des Lock-In-Verstärkers 34 wird in einem 1:1-Umkehrverstärker 70 invertiert, wobei sowohl das Eingangssignal als auch das invertierte Signal einem Analogumschalter 71 zugeführt werden. Der Analogumschalter 71 verbindet den Tiefpaßfilter 65 bei positivem Referenzsignal mit dem Eingangssignal und bei negativem Referenzsignal mit dem invertierten Eingangssignal. Auf diese Weise tragen neben den In-Phase-Anteilen des Eingangssignals auch die Gegen-Phase-Anteile positiv zum Ausgangssignal des Lock-In-Verstärkers 34 bei. Dies erhöht die Empfindlichkeit der Schaltung. Sind das Eingangessignal und das Referenzsignal zueinander um 90° phasenverschoben, so erzeugt der Analogumschalter 71 eine gleichspannungsfreie Wechselspannung, die vom Tiefpaßfilter 65 unterdrückt wird.

**Bezugszeichenliste**

| | |
|---|---|
| 1 | Vorrichtung |
| 2 | Träger |
| 4 | Sendeschleife |
| 5 | Schirmleitung |
| 6,7 | Empfangsschleife |
| 8 | Platine |
| 9 | Lötstelle |
| 10 | Platine |
| 11 | masseseitiges Ende |
| 12 | Gegenende |
| 13 | Transformator |
| 14 | Kondensator |
| 15 | Transformator |
| 16 | Kondensator |
| 17 | Auswerteschaltung |
| 20 | Warenbahn |
| 21 | Laufrichtung |
| 22 | Metallkörper |
| 25 | Oszillator |
| 26 | Sendeverstärker |
| 27 | Empfangsverstärker |
| 28 | Ausgang des Empfangsverstärkers |
| 29 | nicht invertierender Eingang des Vergleichers |
| 30 | Vergleicher |
| 31 | invertierender Eingang des Vergleichers |
| 32 | Ausgang des Vergleichers |
| 33 | Eingang des Lock-In-Verstärkers |

| | |
|---|---|
| 34,35 | Lock-In-Verstärker |
| 36 | Referenzeingang |
| 37 | Phasenschieber |
| 38 | Ausgang |
| 39, 39' | Soll-Wert-Eingang |
| 40 | Regeleinrichtung |
| 41 | Ausgang |
| 42,43 | Multiplizierer |
| 44 | Eingang |
| 45,46 | Ausgang |
| 47 | Summierer |
| 48 | Ausgang |
| 49 | Amplitudendetektor |
| 50 | Phasendetektor |
| 51 | Mikrocontroller |
| 52 | Gleichrichter |
| 53 | Tiefpaßfilter |
| 54 | Analog-Digital-Umsetzer |
| 55 | Digitalausgang |
| 56 | Eingang |
| 57 | Phasenschieber |
| 58 | Referenzeingang |
| 59 | D-Flip-Flop |
| 60 | Regeleinrichtung |
| 61 | Analogschalter |
| 61' | Steuereingang des Analogschalters |
| 62 | Komparator |
| 63 | invertierender Eingang des Komparators |
| 64 | Ausgang des Komparators |
| 65 | Tiefpaßfilter |
| 66 | Verstärker |
| 70 | Umkehrverstärker |
| 71 | Analogumschalter |

**Patentansprüche**

1. Verfahren zum Feststellen von Metallkörpern (22), die sich an einer laufenden Warenbahn (20) befinden, bei dem ein elektromagnetisches Wechselfeld ausgesendet und ein Signal empfangen wird, dessen Phase und/oder Amplitude vom Metallkörper (22) beeinflußbar ist, **dadurch gekennzeichnet, daß** das empfangene Signal mit mindestens einem Kompensationssignal verglichen wird, welches dem empfangenen Signal in seiner Amplitude und Phase nachgeregelt wird, wobei das Vergleichsergebnis zur Bestimmung des Vorhandenseins des Metallkörpers (22) an der Warenbahn (20) ausgewertet wird.

2. Verfahren nach Anspruch 1, **dadurch gekennzeichnet, daß** mindestens zwei zueinander phasenverschobene Teilkompensationssignale mit jeweils konstanter Phasenlage zum ausgesendeten Wechselfeld erzeugt und in ihren Amplituden geregelt werden, wobei eine Überlagerung beider Teilkompensationssignale das Kompensationssignal ergibt.

3. Verfahren nach Anspruch 1 oder 2, **dadurch gekennzeichnet, daß** das Kompensationssignal oder die Teilkompensationssignale durch Regelung eines Signals erzeugt werden, das phasenselektiv aus einem vom empfangenen Signal abhängigen Signal ausgewertet wird und das Vergleichsergebnis zwischen dem empfangenen Signal und dem Kompensationssignal Lock-In-verstärkt wird, wobei ein Referenzsignal eine zum gesendeten Wechselfeld konstante Phasenlage aufweist.

4. Verfahren nach mindestens einem der Ansprüche 1 bis 3, **dadurch gekennzeichnet, daß** die Regelung des Kompensationssignals oder der Teilkompensationssignale ausschließlich integrierend wirkt.

5. Verfahren nach mindestens einem der Ansprüche 1 bis 4, **dadurch gekennzeichnet, daß** das Vergleichsergebnis zwischen dem empfangenen Signal und dem Kompensationssignal auf einen oszillierenden Sollwert geregelt wird, der zum ausgesendeten Wechselfeld phasenkonstant ist.

6. Verfahren nach mindestens einem der Ansprüche 1 bis 5, **dadurch gekennzeichnet, daß** das Vergleichsergebnis einem Phasendetektor (50) zugeführt wird, der eine Phasenverschiebung des Vergleichsergebnisses oder eines vom ausgesendeten Wechselfeld abgeleiteten Signals bewirkt, wobei die Phasenverschiebung durch Regelung eines Phasensignals erzeugt wird, das von der Phasendifferenz zwischen dem Vergleichsergebnis und dem gesendeten Wechselfeld unter Berücksichtugung der erzeugten Phasenverschiebung abhängt.

7. Verfahren nach mindestens einem der Ansprüche 1 bis 6, **dadurch gekennzeichnet, daß** auf das Vergleichsergebnis oder auf ein Ausgangssignal des Phasendetektors (50) eine Korrelationsfunktion angewendet wird.

8. Vorrichtung zum Feststellen von Metallkörpern (22), die sich an einer laufenden Warenbahn (20) befinden, wobei die Vorrichtung (1) mindestens eine, ein elektromagnetisches Wechselfeld ausstrahlende Sendeeinrichtung (4) aufweist, die mit mindestens einer Empfangseinrichtung (6, 7) gekoppelt ist, die mit einem ersten Signaleingang (29) eines Vergleichers (30) in Wirkverbindung steht, **dadurch gekennzeichnet, daß** der Vergleicher (30) an einem zweiten Signaleingang (31) mit mindestens einer Regeleinrichtung (40) in Wirkverbindung steht, die von der Amplituden- und der Phasenlage des empfangenen Signals beeinflußbar ist und welche so ausgestattet ist, daß sie ein Kompensationssignal, welches am zweiten Signaleingang (31) anliegt, dem empfangenen Signal in Amplitude und Phase nachregelt.

9. Vorrichtung nach Anspruch 8, **dadurch gekennzeichnet, daß** die Sendeeinrichtung (4) und die Empfangseinrichtung (6, 7) von jeweils mindestens einer die Warenbahn (20) quer zu ihrer Laufrichtung (21) übergreifenden Leiterschleife (4) gebildet ist, deren Enden durch Kondensatoren (14, 16) abgeschlossen sind und die Sendeeinrichtung (4) oder die Empfangseinrichtung (6, 7) von mindestens zwei in Bahnlaufrichtung (21) hintereinander angeordneten Leiterschleifen (6, 7) gebildet ist.

10. Vorrichtung nach Anspruch 9, **dadurch gekennzeichnet, daß** die Leiterschleifen (6, 7) an einem Ende (11) miteinander verbunden sind, während die Gegenenden (12) durch einen Kondensator (14) abgeschlossen sind und mit einem Sendeverstärker (26) oder einem Differenzverstärker (27) in Wirkverbindung stehen.

11. Vorrichtung nach mindestens einem der Ansprüche 8 bis 10, **dadurch gekennzeichnet, daß** der Regeleinrichtung (40) mindestens ein Multiplizierer (42, 43) nachgeordnet ist, der eingangsseitig mit einem die Sendeeinrichtung (4) ansteuernden Oszillator (25) und ausgangsseitig mit dem Vergleicher (30) in Wirkverbindung steht.

12. Vorrichtung nach mindestens einem der Ansprüche 8 bis 11, **dadurch gekennzeichnet, daß** die Regeleinrichtung (40) von mindestens einem Lock-In-Verstärker (34, 35) beeinflußt ist, der eingangsseitig (33) mit dem Vergleicher (30) oder der Empfangseinrichtung (6, 7) in Wirkverbindung steht und einen Referenzeingang (36) aufweist, der mit dem die Sendeeinrichtung (4) ansteuernden Oszillator (25) in Wirkverbindung steht.

13. Vorrichtung nach mindestens einem der Ansprüche 8 bis 12, **dadurch gekennzeichnet, daß** der Vergleicher (30) ausgangsseitig mit einem Phasendetektor (50) in Wirkverbindung steht, der zumindest einen steuerbaren Phasenschieber (57) aufweist, dessen Steuereingang von einer Regeleinrichtung (60) angesteuert wird, wobei der Phasenschieber (57) und die Sendeeinrichtung (4) mit jeweils einem Eingang (1D, C1) eines D-Flip-Flops (59) in Wirktverbindung stehen, dessen Ausgang (Q) den Ist-Wert der Regeleinrichtung (60) bildet.

## Claims

1. Method for detecting metal bodies (22) on a moving web (20), in which an alternating electromagnetic field is emitted and a signal is received whose phase and/or amplitude can be influenced by the metal body (22), **characterized in that** the received signal is compared with at least one compensation signal whose amplitude and phase is corrected to match the received signal, the comparison result being evaluated to determine the existence of the metal body (22) on the web (20).

2. Method according to Claim 1, **characterized in that** at least two mutually phase-shifted sub-compensation-signals are generated, each having a constant phase with respect to the emitted alternating field, and whose amplitudes are controlled, the compensation signal being obtained by superimposing both sub-compensation-signals.

3. Method according to Claim 1 or 2, **characterized in that** the compensation signal or the sub-compensation-signals are generated by controlling a signal, which is evaluated phase-selectively from a signal dependent on the received signal, and the result of the comparison between the received signal and the compensation signal is amplified by a lock-in amplifier, where a reference signal has a constant phase with respect to the emitted alternating field.

4. Method according to at least one of Claims 1 to 3, **characterized in that** the control of the compensation signal or the sub-compensation-signals acts solely in an integrating fashion.

5. Method according to at least one of Claims 1 to 4, **characterized in that** the comparison result between the received signal and the compensation signal is controlled to an oscillating setpoint value that has a constant phase with respect to the emitted alternating field.

6. Method according to at least one of Claims 1 to 5, **characterized in that** the comparison result is fed to a phase detector (50), which phase shifts the comparison result or a signal derived from the emitted alternating field, the phase shift being generated by controlling a phase signal that depends on the phase difference between the comparison result and the emitted alternating field, taking into account the generated phase shift.

7. Method according to at least one of Claims 1 to 6, **characterized in that** a correlation function is applied to the comparison result or to an output signal of the phase detector (50).

8. Device for detecting metal bodies (22) on a moving web (20), the device (1) having at least one transmitting device (4) emitting an alternating electromagnetic field, which is coupled to at least one receiving device (6, 7), which is actively connected to a first signal input (29) of a comparator (30), **characterized in that** the comparator (30) is actively connected at a second signal input (31) to at least one control device (40) that can be influenced by the amplitude and phase of the received signal and which is equipped so that it corrects the amplitude and phase of a compensation signal at the second signal input (31) to match the received signal.

9. Device according to Claim 8, **characterized in that** the transmitting device (4) and receiving device (6, 7) are each formed by at least one conductor loop (4) extending over the web (20) at right angles to its direction of movement (21), whose ends are terminated by capacitors (14, 16), and the transmitting device (4) or the receiving device (6, 7) is formed by at least two conductor loops (6, 7) arranged one after the other in the direction of web movement (21).

10. Device according to Claim 9, **characterized in that** the conductor loops (6, 7) are connected together at one end (11), while the opposite ends (12) are terminated by a capacitor (14) and are actively connected to a transmitting amplifier (26) or a differential amplifier (27).

11. Device according to at least one of the Claims 8 to 10, **characterized in that** at least one multiplier (42, 43) is connected to the output of the control device (40), the input of said multiplier being actively connected to an oscillator (25) driving the transmit device (4), and the output of said multiplier being actively connected to the comparator (30).

12. Device according to at least one of the Claims 8 to 11, **characterized in that** the control device (40) is influenced by at least one lock-in amplifier (34, 35), whose input (33) is actively connected to the comparator (30) or the receive device (6, 7), and which has a reference input (36), which is actively connected to the oscillator (25) driving the transmit device (4).

13. Device according to at least one of the Claims 8 to 12, **characterized in that** the output of the comparator (30) is actively connected to a phase detector (50), which has a least one controllable phase shifter (57), whose control input is driven by a control device (60), with the phase shifter (57) and the transmit device (4) being actively connected to one input (1D, C1) in each case of a D-flip-flop (59) whose output (Q) forms the actual value of the control device (60).

## Revendications

1. Procédé pour détecter des corps métalliques (22) qui se trouvent sur une bande de matière (20) en mouvement, avec lequel un champ alternatif électromagnétique est émis et un signal est reçu dont la phase et/ou l'amplitude peut être influencée par le corps métallique (22), **caractérisé en ce que** le signal reçu est comparé avec au moins un signal de compensation qui est régulé en amplitude et en phase en fonction du signal reçu, le résultat de la comparaison étant interprété pour déterminer la présence du corps métallique (22) sur la bande de matière (20).

2. Procédé selon la revendication 1, **caractérisé en ce qu'**au moins deux signaux de compensation partiels déphasés l'un par rapport à l'autre ayant chacun une différence de phase constante par rapport au champ alternatif émis sont générés et régulés en amplitude, une superposition des deux signaux de compensation partiels produisant le signal de compensation.

3. Procédé selon la revendication 1 ou 2, **caractérisé en ce que** le signal de compensation ou les signaux de compensation partiels sont générés en régulant un signal qui est interprété avec sélection de phase à partir d'un signal dépendant du signal reçu et le résultat de la comparaison entre le signal reçu et le signal de compensation est amplifié avec blocage, un signal de référence présentant une différence de phase constante par rapport au champ alternatif émis.

4. Procédé selon au moins l'une des revendications 1 à 3, **caractérisé en ce que** la régulation du signal de compensation ou des signaux de compensation partiels agit exclusivement par intégration.

5. Procédé selon au moins l'une des revendications 1 à 4, **caractérisé en ce que** le résultat de la comparaison entre le signal reçu et le signal de compensation est régulé sur une valeur de consigne oscillante qui est en phase constante par rapport au champ alternatif émis.

6. Procédé selon au moins l'une des revendications 1 à 5, **caractérisé en ce que** le résultat de la comparaison est envoyé à un comparateur de phase (50) qui effectue un déphasage du résultat de la comparaison ou d'un signal dérivé du champ alternatif émis, le déphasage étant généré en régulant un signal de phase qui dépend de la différence de phase entre le résultat de la comparaison et le champ alternatif émis en tenant compte du déphasage généré.

7. Procédé selon au moins l'une des revendications 1 à 6, **caractérisé en ce qu'**une fonction de corrélation est appliquée au résultat de la comparaison ou à un signal de sortie du détecteur de phase (50).

8. Dispositif pour détecter des corps métalliques (22) qui se trouvent sur une bande de matière (20) en mouvement, le dispositif (1) présentant au moins un dispositif d'émission (4) diffusant un champ alternatif électromagnétique, lequel est connecté avec au moins un dispositif de réception (6, 7) qui se trouve en liaison active avec une première entrée de signal (29) d'un comparateur (30), **caractérisé en ce que** le comparateur (30) est en liaison active au niveau d'une deuxième entrée de signal (31) avec au moins un dispositif de régulation (40) qui peut être influencé par le niveau d'amplitude et de phase du signal reçu et qui est configuré de manière à réguler l'amplitude et la phase d'un signal de compensation qui est appliqué à la deuxième entrée de signal (31).

9. Dispositif selon la revendication 8, **caractérisé en ce que** le dispositif d'émission (4) et le dispositif de réception (6, 7) est formé à chaque fois par au moins une boucle conductrice (4) qui enjambe la bande de matière (20) transversalement par rapport à son sens de défilement (21) et dont les extrémités sont terminées par des condensateurs (14, 16) et le dispositif d'émission (4) ou le dispositif de réception (6, 7) est formé par au moins deux boucles conductrices (6, 7) disposées l'une derrière l'autre dans le sens de défilement de la bande (21).

10. Dispositif selon la revendication 9, **caractérisé en ce que** les boucles conductrices (6, 7) sont reliées ensemble à une extrémité (11), alors que les extrémités opposées (12) sont terminées par un condensateur (14) et sont en liaison active avec un amplificateur d'émission (26) ou un amplificateur différentiel (27).

11. Dispositif selon au moins l'une des revendications 8 à 10, **caractérisé en ce que** le dispositif de régulation (40) est suivi par au moins un multiplicateur (42, 43) dont l'entrée est en liaison active avec un oscillateur (25) qui commande le dispositif d'émission (4) et la sortie avec le comparateur (30).

12. Dispositif selon au moins l'une des revendications 8 à 11, **caractérisé en ce que** le dispositif de régulation (40) est influencé par au moins un amplificateur à blocage (34, 35) dont l'entrée (33) est en liaison active avec le comparateur (30) ou le dispositif de réception (6, 7) et présente une entrée de référence (36) qui est en liaison active avec un oscillateur (25) qui commande le dispositif d'émission (4).

13. Dispositif selon au moins l'une des revendications 8 à 12, **caractérisé en ce que** le comparateur (30) est en liaison active du côté de la sortie avec un détecteur de phase (50), lequel présente au moins un déphaseur (57) commandable dont l'entrée de commande est commandée par un dispositif de régulation (60), le déphaseur (57) et le dispositif d'émission (4) étant respectivement en liaison active avec une entrée (1D, C1) d'une bascule D (59) dont la sortie (Q) forme la valeur réelle du dispositif de régulation (60).

*Fig. 1*

*Fig. 2*

EP 1 059 542 B1

_Fig. 3_

_Fig. 4_

_Fig. 5_

_Fig. 6_